# EUROPEAN PATENT APPLICATION

(11) **EP 4 570 349 A1**
(43) Date of publication of application: **18.06.2025**
(21) Application number: 23216120.8
(22) Date of filing: 13.12.2023
(51) Int. Cl.: B01D 45/04, B01D 45/12, B01D 46/00, B01D 46/24, B01D 50/20, F16D 65/00

(54) **AIR FILTER HAVING PARTICLE COLLECTION CHAMBER FOR PRE-SEPARATED PARTICLES INSIDE FILTER ELEMENT**

(71) Applicant: MANN+HUMMEL GmbH, 71636 Ludwigsburg (DE)
(72) Inventor: PFANNKUCH, Steffen, 71636 Ludwigsburg (DE); KOHN, Kevin, 71636 Ludwigsburg (DE)
(74) Representative: Mann + Hummel Intellectual Property

(57) **Abstract**

An air filter (10) includes a housing (12) including a raw air inlet (52) and a clean air outlet (74), a filter element (20) arranged inside the housing (12) and including an upper end cap (24), a lower end cap (26), an annular filter medium body (22) arranged between the upper end cap (24) and the lower end cap (26), and an annular outer space (66) arranged between an outer surface (68) of the annular filter medium body (22) and the housing (12), the annular outer space (66) being in fluid communication with the clean air outlet (74), and an inertial separator (18) arranged inside the housing (12) and being in fluid communication with the raw air inlet (52), the inertial separator (18) including a particle outlet (60). The inertial separator (18) penetrates through an opening (28) of the upper end cap (24) into the filter element (20).

## Description

### TECHNICAL FIELD

The present invention refers to an air filter, in particular a brake dust filter, including a housing, a filter element having an annular filter medium body arranged between an upper end cap and a lower end cap, and an inertial separator, the filter element and the inertial separator being received inside the housing, the inertial separator being in fluid communication with a raw air inlet, the upper end cap having an opening, which is in fluid communication with a clean air outlet.

### BACKGROUND ART

A brake dust filter of this kind is known form US 2020/0355230 A1.

Brake dust filters are used to capture brake dust emerging from wheel brakes of vehicles. By capturing the brake dust, staining of components arranged adjacent to the wheel brake, such as rims, can be avoided. Furthermore, pollution of the environment by the brake dust can be reduced. Release of brake dust into the environment is increasingly seen as problematic, since brake dust contributes to the fine dust emission of the vehicle, which is considered harmful for living beings.

Passive brake dust filters use the immanent airflow caused by the motion of the vehicle or the rotation of the brakes to direct brake dust laden air through a filter device. Active brake dust filter systems use additional devices, such as fans, to force the brake dust particle laden airflow through a filter device.

With active brake dust filters, the air flow rate is rather low as compared to e.g. cabin air filtration or combustion air filtration, while the amount of dust to be separated from the air flow is quite high. Using standard filter elements, made from e.g. pleated filter paper, would require large installation spaces, in order to achieve reasonable service life with active brake dust filters.

US 2020/0355230 A1, mentioned at the outset, discloses a filtration device that enables the separation and collection of dust and particles produced by the pads of a brake assembly. A first separation unit having an air filtration medium, typically annular, is provided in the housing of the device in order to define an upstream zone where air is admitted, for example tangentially, and a downstream zone in communication with an outlet of the housing for discharging the purified air. The filter medium may include or consist of an annular air filtration unit made of paper, which may be relatively rigid. This medium may extend between two molded flanges forming end caps. A pre-separator may be interposed between a side wall of the housing and the outer face of the annular filter medium, to limit the passage of water into the filter medium of the first separation unit. Such a pre-separator may be combined with a cyclone effect. A second separation unit enables the separation of water from the dust and particles that have fallen from the upstream zone, the second separation unit being located in the lower stage and suitable for filtering the water by retaining dust and particles, preferably by centripetal filtration.

Further brake dust separation devices are known from WO 2022/101040 A1, EP 3 995 715 A1, US 2022/0252117 A1, FR 3 074 464 B1 or DE 10 2017 201 736 A1.

It is an object of the invention to increase the service life of compact sized brake dust particle filters.

This is achieved by a brake dust filter according to claim 1, and a filter element according to claim 15. Advantageous embodiments are given in the subclaims and the description.

### SUMMARY

In accordance with the invention, an air filter, in particular a brake dust filter, is provided. The air filter includes a housing. The housing may include a first and a second housing part detachably fixed to one another.

The air filter includes a filter element having an annular filter medium body arranged between an upper end cap and a lower end cap. The annular filter medium body and the upper and lower end caps enclose an interior space, also referred to as inside. In other words, the filter medium body annularly surrounds the interior space, while the end caps axially delimit the interior space. The filter medium body may be circular or oval in cross section. Generally, the shape of the filter medium body may be adapted to the available installation space. The filter medium body is preferably made from pleated filtration medium, such as paper. This increases the flow surface and dust accumulation capacity. Preferably, the filter medium body is to be flown through from the inside towards the outside.

The air filter further includes an inertial separator. The inertial separator provides for removal of large and/or heavy particles. This provides relief to the filter element. Thus, the filter element may be designed to capture less particles, while maintaining a reasonable service life.

Preferably, the inertial separator is a cyclone separator. Cyclone separators are particularly effective even at a small size.

The filter element and the inertial separator are arranged inside the housing. By receiving the inertial separator inside the housing, a compact ensemble is obtained.

Generally, the filter element needs to be replaced from time to time, while the inertial separator typically is a lifetime component. To exchange the filter element, the housing can be opened.

The inertial separator is in fluid communication with a raw air inlet. Thus, the raw air is fed through the inertial separator first. Then, the pre-cleaned air flow, which carries in particular less large and/or heavy particles, is made to pass through the filter medium body of the filter element. The filter medium body captures smaller and/or lighter particles still present in the pre-cleaned air flow.

Particularly preferably, the lower end cap is closed. The lower end cap may be a monolithic part, made from e.g. polyurethane foam. Alternatively, an insert may close a central region of the lower end cap. The lower end cap may be cast or glued to the filter medium body.

The upper end cap has an opening. The filter element further includes an annular outer space arranged between an outer surface of the filter medium body and the housing. The annular outer space is in fluid communication with a clean air outlet. The clean air outlet is typically formed at the housing. After having passed both separation stages, the clean air is released through the clean air outlet.

The inertial separator penetrates through the opening of the upper end cap into the filter element. In other words, the inertial separator is at least partially arranged inside the filter element. This results in a further reduced space requirement of the air filter. The relatively low air flow rates in air filtration allow accommodating the inertial separator in the interior space of the filter element without increasing the pressure loss too much.

Apart from the opening, the upper end cap is generally closed. The upper end cap is preferably a monolithic part, made from e.g. polyurethane foam, in which the opening is formed. The upper end cap may be cast or glued to the filter medium body.

Further according to the invention a particle collection chamber is formed inside the filter element. A particle outlet of the inertial separator is in fluid communication with the particle collection chamber. Thus, the dust or particles separated from the air flow by the inertial separator are accumulated inside the filter element. In a first aspect, this contributes to save installation space, as compared to an external particle collection chamber. In a second aspect, this facilitates service of the air filter. When the filter element is replaced, the particles inside the particle collection chamber are automatically disposed. By accumulating the large particles inside the filter element and the smaller particles in the filter medium body, release of particles during service is reduced.

Since both the inertial separator and the particle collection chamber are received inside the filter element, the housing may be adapted to be just large enough to accommodate the filter element. Only a small bulge may be required for the part of the inertial separator that protrudes above the upper end cap. In other words, arranging the inertial separator and the particle collection chamber inside the filter element significantly increases dust accumulation capacity and service life as compared to an air filter having the same filter element but no pre-separation means, while installation space remains basically the same.

Indications of directions, such as upper, lower, below or above, generally refer to a position in which the air filter is intended to be used. Note that the particle collection chamber is generally arranged below the inertial separator, in order to allow particles to fall into the particle collection chamber under gravitational action.

The annular filter medium body generally surrounds a longitudinal axis. Indications of directions, such as radial, axial, or circumferential, generally refer to the longitudinal axis of the filter medium body. In operation, the longitudinal axis may be approximately vertically aligned.

The raw air inlet may be formed at an inlet conduit of the inertial separator. This facilitates mounting an air conduit, which leads particle laden air from a wheel brake to the air filter. The inlet conduit may be permanently fixed to a body of the inertial separator, in particular, wherein the inlet conduit is integrally formed with the body of the inertial separator. Alternatively, the inlet conduit may be temporarily fixed to, or not integrally formed with, the body of the inertial separator so that the inlet conduit may be replaceable and/or cleanable. The housing, in particular the first housing part, may have a guide opening through which the inlet conduit protrudes towards the outside. A sealing (e.g., a gasket, an o-ring or a labyrinth geometry) held at the guide opening may seal the inlet conduit against the housing. This design contributes to align the inertial separator and may facilitate service, as the inertial separator is kept in place at the first housing part, when the filter element is removed.

A pre-separation outlet of the inertial separator may extend above the upper end cap of the filter element and may be in fluid communication with an inner surface of the filter medium body, via a center conduit arranged inside the filter medium body. This allows pre-cleaned air to be led to the outside of the inertial separator above the opening of the upper end cap, before passing back through the opening of the upper end cap into an inside of the filter element.

The housing may have a positioning element for the inertial separator, e.g., the positioning element including positioning studs that are spaced apart from one another or a positioning or closed ring. The positioning element contributes to align the inertial separator for operation. Typically, the positioning element abuts a part of the inertial separator, which protrudes above the upper end cap. The spacing between the studs allows for an air flow, in particular from a pre-separation outlet of the inertial separator towards the opening of the upper end cap. The positioning element may be permanently fixed to the first housing part of the housing. In particular, the positioning element may be integrally formed with the first housing part.

Preferably, the filter element is aligned by lead edges of a first housing part of the housing, which lead edges abut the upper end cap. The lead edges are generally spaced apart from one another. In this way, radial centering of the filter element is achieved at its upper end, while allowing air flow around the outer edge of the upper end cap, i.e., from a pre-filtration outlet of the inertial separator towards the opening of the upper end cap.

The lower end cap may be aligned by abutment against a constriction of the second housing part of the housing. Thus, the filter element is centered inside the housing at its lower end.

The clean air outlet may be formed at an outlet conduit in fluid communication with the annular outer space. This facilitates connecting the clean side outside the filter element to the clean air outlet. Preferably, the outlet conduit is permanently fixed to the second housing part of the housing, in particular, wherein the outlet conduit is integrally formed with the second housing part. Alternatively, the outlet conduit may be temporarily fixed to, or not integrally formed with, the second housing part so that the outlet conduit may be replaceable and/or cleanable.

Preferably, the lower end cap delimits the particle collection chamber. This provides for an integrated design, with low number of parts. Further, exploitation of the interior space of the filter element is enhanced.

The filter element may include a center conduit, which delimits the particle collection chamber. In this way, the particle collection can be separated from the (inner surface) of the filter medium body.

Preferably, the center conduit has a grid section and a closed skirt section, which closed skirt section delimits the particle collection chamber. While the closed skirt section keeps particles separated by the inertial separator inside the particle collection chamber, the grid section allows (pre-cleaned) air to pass through the center conduit and allows for a radial outward flow pattern to the filter medium body, while exploiting its entire inner surface for filtration.

Preferably, the closed skirt section is embedded in the lower end cap. This provides for a reliable sealing of the particle connection chamber, when the lower end cap delimits the particle collection chamber downwardly. Further, stability of the filter element is enhanced.

The grid section may be embedded in the upper end cap. This further enhances stability of the filter element.

The grid section may abut the inner surface of the filter medium body. In this way radial support is provided to the filter medium body.

The center conduit may have a separation floor which spans across the closed skirt section and delimits the particle collection chamber. Typically, the separation floor is arranged parallel to the lower end cap. With the separation floor, the particle collection chamber is closed upwardly.

Preferably, the separation floor has a particle feed opening, which is sealingly connected to the particle outlet of the inertial separator. This allows to introduce the particles from the inertial separator into the particle collection chamber. A sealing (e.g., a gasket, an o-ring or a labyrinth geometry) may be held at the particle feed opening. The sealing reliably prevents particles from exiting the particle collection chamber towards the clean air outlet. The sealing may be made from, e.g., polyurethane foam and may be cast to the separation floor of the center conduit, in particular prior to casting the end caps to the center conduit and the filter medium body.

In summary, the particle collection chamber may be enclosed by the lower end cap, the separation floor, and the closed skirt section.

The closed skirt section may be offset towards the inside of the filter element with respect to the grid section. This avoids contact of the closed skirt section with the inner surface of the filter medium body. Consequently, the closed skirt section does not hinder air flow through the filter medium body.

An outer rim of the separation floor may connect the grid section and the closed skirt section. The center conduit may be one monolithic part, including the grid section, the closed skirt section and the separating floor. This facilitates manufacturing of the center conduit and assembly of the filter element.

Preferably, the outer rim of the separation floor has flow openings. Pre-cleaned air, which is on the axial level of the grid section, i.e., in an upper area of the filter element, may pass through the flow openings to be filtered by the filter medium body on the axial level of the closed skirt section, i.e., in a lower area of the filter element.

The grid section and the closed skirt section of the center conduit may be arranged axially adjacent to one another. This facilitates manufacturing of the center conduit. Alternatively, the grid section may overlap the closed skirt section towards the lower end cap. This provides additional support to the filer medium body.

The air filter may further include at least one suction bracket in fluid communication with the raw air inlet. For operation, the suction bracket is arranged near a wheel brake, in particular engaging around a brake disk and/or adjacent to a brake caliper. For connecting the suction bracket to the raw air inlet a hose or pipe may be employed. The suction bracket receives particle laden air near the wheel brake. Thus, loss of brake dust particles into the environment is reduced.

The air filter may further include a vacuum generator in fluid communication with the clean air outlet. The vacuum generator forces particle laden air to flow through the inertial separator and the filter element. The vacuum generator contributes to avoid particles being lost at the wheel brake. Thus, efficacy of the air filter is enhanced.

The invention further relates to a filter element for an air filter, preferably for the air filter according to the invention, as described above. The filter element has an annular filter medium body arranged between an upper end cap and a preferably closed lower end cap, wherein the upper end cap has an opening, and wherein a particle collection chamber is formed inside the filter element. The opening allows an inertial separator to be at least partially arranged inside the filter element. The particle collection chamber accumulates particles separated from the air flow by the inertial separator, prior to the air flow passing through the filter medium body.

The filter element may have further features as described above. Preferably, the lower end cap delimits the particle collection chamber. The filter element may include a center conduit, which delimits the particle collection chamber. Preferably, the center conduit has a grid section and a closed skirt section that delimits the particle collection chamber. The center conduit may have a separation floor that spans across the closed skirt section and delimits the particle collection chamber. The particle collection chamber may be enclosed by the lower end cap, the separation floor, and the closed skirt section. Preferably, the separation floor has a particle feed opening, for receiving a particle outlet of the inertial separator. The closed skirt section may be offset towards the inside of the filter element with respect to the grid section. An outer rim of the separation floor may connect the grid section and the closed skirt section. Preferably, the outer rim of the separation floor has flow openings.

### BRIEF DESCRIPTION OF DRAWINGS

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
Fig. 1a shows a brake dust filter according to the invention including an inertial separator which is arranged inside a filter element according to the invention, in a schematic, partially sectional view.
Fig. 1b shows the brake dust filter from Fig. 1a, in a schematic external view.
Fig. 1c shows the brake dust filter from Figs. 1a and 1b, in a schematic cross-sectional view.
Fig. 2 shows the filter element of the brake dust filter from Figs. 1a-1c, in a schematic sectional view.
Fig. 3 shows a sketch of a brake dust filter according to the invention, including a vacuum generator and a suction bracket arranged at a brake disk.

### DETAILED DESCRIPTION

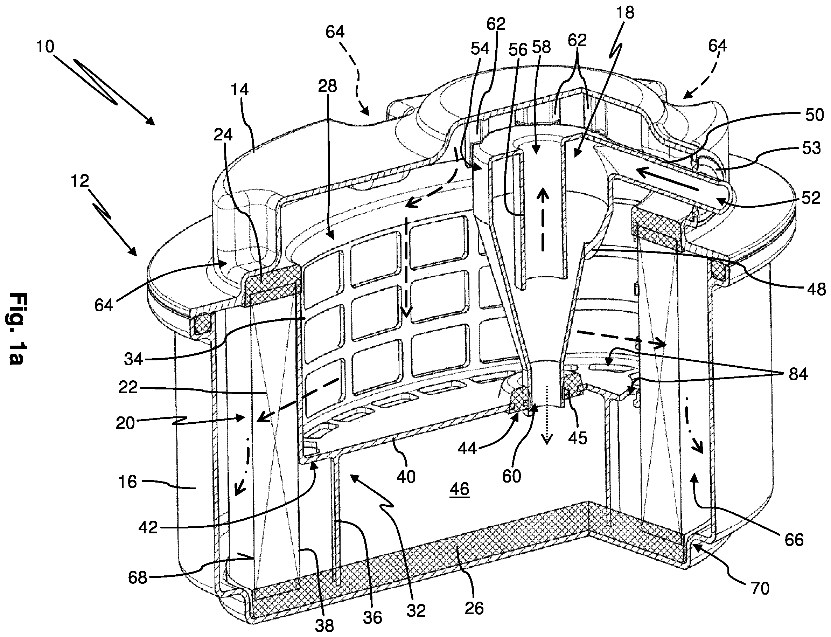

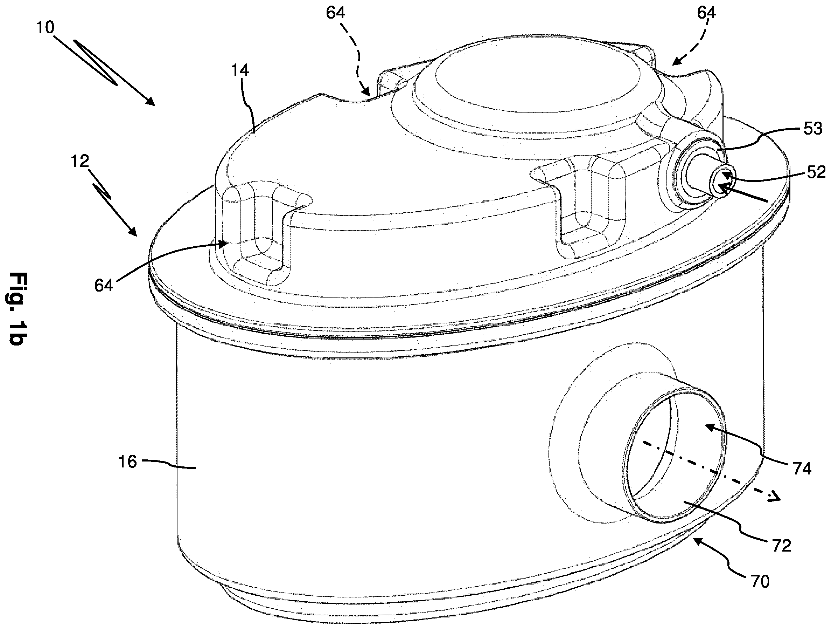

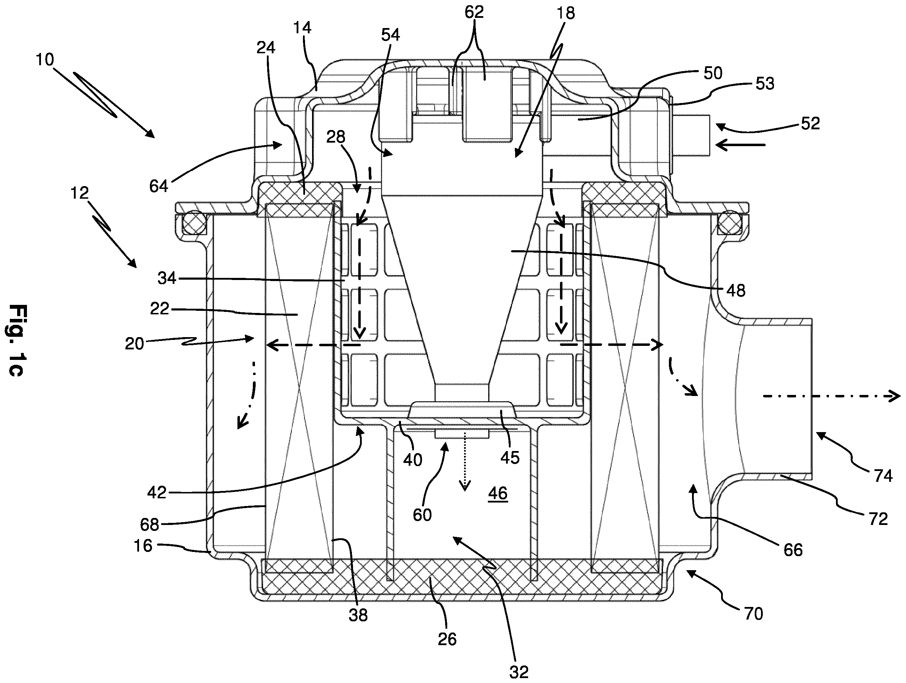

Figures 1a, 1b and 1c show a brake dust filter 10 or an air filter. The brake dust filter 10 has a housing 12, which includes a first housing part 14 and a second housing part 16. The first and second housing parts 14, 16 are detachably mounted and sealed against each other.

Inside the housing 12, an inertial separator 18 and a filter element 20 are arranged. The inertial separator 18 is a cyclone separator in the depicted embodiment.

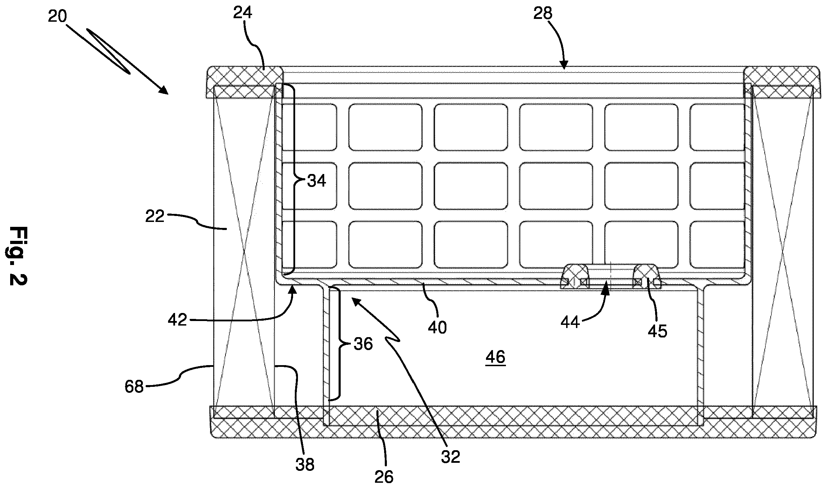

The filter element 20 includes an annular filter medium body 22 (see also Figure 2). The filter medium body 22 is preferably made from pleated filter paper. In this embodiment, the filter medium body 22 has an oval cross section. The filter medium body 22 is confined between an upper end cap 24 and a lower end cap 26. The end caps 24, 26 can be made from polyurethane foam and may be cast to the filter medium body 22 in order to seal face edges of its pleats.

The lower end cap 26 is closed. In this embodiment, the lower end cap 26 is one monolithic foam part.

The upper end cap 24 has an opening 28, the purpose of which will be explained later on in detail.

The filter element 20 further includes a center conduit 32, which is arranged inside the filter medium body 22. In axial direction, the center conduit 32 extends from the upper end cap 24 to the lower end cap 26. Axial end sections of the center conduit 32 are embedded in the end caps 24, 26.

In an upper region of the center conduit 32, a grid section 34 is formed and is in fluid communication with the opening 28 of the upper end cap 24 and with the filter medium body 22. Here, the grid section 34 is made with axial and circumferential ribs, which are arranged in a lattice structure.

In a lower region of the center conduit 32, here below the grid section 34, a closed skirt section 36 is formed. The closed skirt section 36 is annular in shape and circumferentially closed. In other words, the closed skirt section 36 does not have any openings, which would permit air flow through the closed skirt section 36 in radial direction. However, it is noted that near the lower edge of the closed skirt section 36, recesses or openings may be formed, which are embedded in the lower end cap 26 and thereby sealed (not depicted in detail).

The grid section 34 is arranged to contact the filter medium body 22 at its inner surface 38. The closed skirt section 36 is arranged at a distance from the inner surface 38 of the filter medium body 22. Thus, the closed skirt section 36 is radially offset towards the inside of the filter element 20 with respect to the grid section 34.

A separation floor 40 is formed at an upper end of the closed skirt section 36. In this embodiment, the separation floor 40 runs parallel to the upper and lower end caps 24, 26. The separation floor 40 spans across the closed skirt section 36. In other words, the closed skirt section 36 is bounded by the separation floor 40 towards the upper end cap 24. An outer rim 42 of the separation floor 40 protrudes beyond the closed skirt section 36 in radial direction and extends to the grid section 34. In this embodiment, the outer rim 42 connects the upper end of the closed skirt section 36 and the lower end of the grid section 34.

The separation floor 40 has a particle feed opening 44, the purpose of which will be explained later on in detail. The particle feed opening 44 is formed in the separation floor 40 radially within the closed skirt section 36. A sealing 45 (e.g., a gasket, an o-ring or a labyrinth geometry) is held at the particle feed opening 44. The sealing 45 can be made from polyurethane foam and may be cast to the center conduit 32.

The lower end cap 26, the closed skirt section 36 and the separation floor 40 delimit a particle collection chamber 46. The particle collection chamber 46 is only accessible through the particle feed opening 44. The particle collection chamber 46 is arranged within the filter element 20. In particular, the particle collection chamber 46 is located radially inside the filter medium body 22 and axially adjacent to and above the lower end cap 26. The particle collection chamber 46 does not extend to the upper end cap 24. Rather, an upper boundary of the particle collection chamber 46 is defined by the separation floor 40.

A body 48 of the inertial separator 18 is partially arranged inside the filter element 20, see Figures 1a and 1c. In this embodiment, the body 48 of the inertial separator 18 is a monolithic part, which can be made from plastics by injection molding.

The inertial separator 18 includes an inlet conduit 50. The inlet conduit 50 is arranged above the upper end cap 24 and may rest against the upper end cap 24. A free end of the inlet conduit 50 defines a raw air inlet 52 of the brake dust filter 10. The inlet conduit 50 protrudes from the first housing part 14, against which it is sealed by a sealing 53 (e.g., a gasket, an o-ring or a labyrinth geometry).

The inlet conduit 50 leads to a head section 54 of the inertial separator 18. The head section 54 is received in the opening 28 of the upper end cap 24.

Downwards form the head section 54, the body 48 of the inertial separator 18 is tapered. An internal pipe 56 defines a pre-separation outlet 58, which extends above the upper end cap 24 in the upwardly protruding part of the head section 54 and is in fluid communication with the inner surface 38 of the filter medium body 22, via the center conduit 32.

At its lower end, the inertial separator 18 is sealingly received in the particle feed opening 44 of the separation floor 40. At the lower end of the inertial separator 18, a particle outlet 60 is provided, which is in fluid communication with the particle collection chamber 46.

The first housing part 14 has a positioning element 62, which abuts the head section 54 of the inertial separator 18. The positioning element 62 holds the inertial separator 18 in alignment with the opening 28 of the upper end cap 24, and prevents the inertial separator 18 from disengaging from the sealing 45 at the particle feed opening 44 of the separation floor 40. In embodiments, the positioning element 62 may include positioning studs or a positioning ring.

The first housing part 14 has lead edges 64, which abut the upper end cap 24. The lead edges 64 center the filter element 20 inside the housing 12, so that an annular outer space 66 is formed between an outer surface 68 of the filter medium body 22 and the second housing part 16. Further, the lead edges 64 block upward movement of the filter element 20.

The lower end cap 26 of the filter element 20 is received in a constriction 70 of the second housing part 16. Thereby, the annular outer space 66 is secured at the lower end of the filter element 20 and downward movement of the filter element 20 is blocked.

An outlet conduit 72 is provided at the second housing part 16. Here the outlet conduit 72 and the second housing part 16 are monolithic with one another. An inner end of the outlet conduit 72 is in fluid communication with the annular outer space 66. An outer free end of the outlet conduit 72 defines a clean air outlet 74 of the brake dust filter 10.

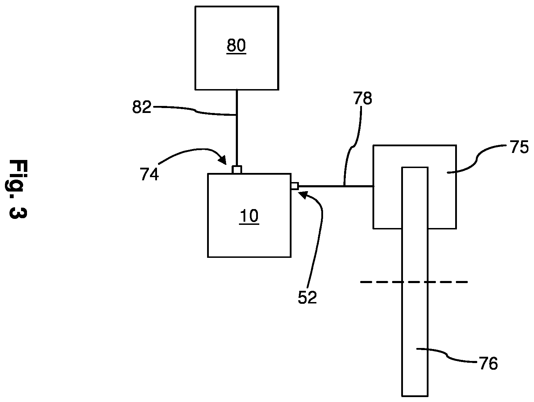

For operation, the raw air inlet 52 of the brake dust filter 10 is connected to a suction bracket 75, which is arranged at brake disk 76 (see Figure 3). The suction bracket 75 may partially engage around the brake disk 76. A hose 78 may connect the suction bracket 75 to the raw air inlet 52.

A vacuum generator 80 is connected to the clean air outlet 74 of the brake dust filter 10, e.g., via a further hose 82. The vacuum generator 80 sucks particle laden air from the suction bracket 75 through the brake dust filter 10 and releases cleaned air into the environment.

The particle laden air enters the brake dust filter 10 at the raw air inlet 52 of the inlet conduit 50 (see the solid arrow in Figures 1a-1c), and is fed into the inertial separator 18.

Inside the inertial separator 18, the air flow is directed downward in a spiral motion. Heavy particles will hit the body 48 of the inertial separator 18 and fall into the particle collection chamber 46 through the particle outlet 60. Since the particle collection chamber 46 is closed apart from the particle outlet 60 or particle feed opening 44, the pre-cleaned air travels upwards through the internal pipe 56 (see the vertical dashed arrow), and exits the inertial separator 18 at the pre-separation outlet 58.

Since the positioning element 62 and the lead edges 64 are spaced apart from one another, the pre-cleaned air travels through the opening 28 of the upper end cap 24 and enters the grid section 34 of the center conduit 32. From the grid section 34, the pre-cleaned air passes through the openings of the grid section 34 and enters into the filter medium body 22 at its inner surface 38 (see the inwardly curved, dashed arrows). Particles, which are still present in the pre-cleaned air flow, are captured in the filter medium body 22. Cleaned air leaves the filter medium body 22 at its outer surface 68. This means all dust (coarse and fine fraction) remains in an inside of the filter element 20, which leads to cleaner and safer handling during service of the filter element 20.

In an upper region, i.e., above the separation floor 40, the pre-cleaned air passes through the openings of the grid section 34 and enters into the filter medium body 22. In a lower region, i.e., below the separation floor 40, radial outward flow of the pre-cleaned air through flow openings 84 is confined by the closed skirt section 36 so that the pre-cleaned air also enters into the filter medium body 22. The cleaned air travels from the filter medium body 22 into the annular outer space 66 (see the downward/outward curved dash-dotted arrow).

All cleaned air enters the outlet conduit 72 at the second housing part 16. The cleaned air exits the housing 12 at the clean air outlet 74 (see the vertical dash-dotted arrow in Figures 1 b and 1c) and is released into the environment by the vacuum generator 80 of Figure 3.

In summary, the invention refers to a two-stage brake dust filter, in particular an active brake dust filter. An inertial separator provides pre-cleaning of particle laden air. A filter element having an annular filter medium body provides fine filtration of the pre-cleaned air. A particle collection chamber for particles removed from the air flow by the inertial separator is formed inside the filter element. The particle collection chamber may be enclosed by a closed lower end cap and a center conduit, which may have an annular closed skirt section and a separation floor. Particles may be fed into the particle collection chamber from the inertial separator through a particle feed opening of the separation floor. The inertial separator is at least partially arranged inside the filter element. An upper end cap has an opening for inserting the inertial separator into the inner space of the filter element.

### REFERENCE SIGNS LIST

brake dust filter 10
housing 12
first housing part 14
second housing part 16
inertial separator 18
filter element 20
filter medium body 22
upper end cap 24
lower end cap 26
opening 28
center conduit 32
grid section 34
closed skirt section 36
inner surface 38
separation floor 40
outer rim 42
particle feed opening 44
sealing 45
particle collection chamber 46
body 48
inlet conduit 50
raw air inlet 52
sealing 53
head section 54
internal pipe 56
pre-separation outlet 58
particle outlet 60
positioning element 62
lead edges 64
annular outer space 66
outer surface 68
constriction 70
outlet conduit 72
clean air outlet 74
suction bracket 75
brake disk 76
hose 78
vacuum generator 80
hose 82
flow openings 84

## Claims

1. An air filter (10) comprising:
a housing (12) comprising a raw air inlet (52) and a clean air outlet (74);
a filter element (20) arranged inside the housing (12) and comprising an upper end cap (24), a lower end cap (26), an annular filter medium body (22) arranged between the upper end cap (24) and the lower end cap (26), and an annular outer space (66) arranged between an outer surface (68) of the annular filter medium body (22) and the housing (12), the annular outer space (66) being in fluid communication with the clean air outlet (74);
an inertial separator (18) arranged inside the housing (12) and being in fluid communication with the raw air inlet (52), the inertial separator (18) comprising a pre-separation outlet (58) and a particle outlet (60),
wherein the upper end cap (24) comprises an opening (28), and
wherein the inertial separator (18) penetrates through the opening (28) into the filter element (20), and
wherein the pre-separation outlet (58) in fluid communication with an inner surface (38) of the annular filter medium body (22), via the opening (28); and
a particle collection chamber (46) arranged inside the filter element (20) and in fluid communication with the particle outlet (60) of the inertial separator (18).

2. The air filter (10) according to claim 1, wherein the inertial separator (18) is a cyclone separator.

3. The air filter (10) according to claim 1 or 2, wherein the inertial separator (18) further comprises an inlet conduit (50), and
wherein the raw air inlet (52) is formed at the inlet conduit (50).

4. The air filter (10) according to one of the preceding claims, wherein the inertial separator (18) is configured to:
receive air flow from the raw air inlet (52);
separate first particles from the received air flow to be collected by the particle collection chamber (46) through the particle outlet (60); and
transfer the air flow from which the first particles are separated, through the pre-separation outlet (58) and the opening (28) of the upper end cap (24) to the inner surface (38) of the annular filter medium body (22), so that the inner surface (38) of the annular filter medium body (22) captures second particles from the air flow from which the first particles are separated.

5. The air filter (10) according to one of the preceding claims, wherein the housing (12) comprises a positioning element (62) configured to align the inertial separator (18).

6. The air filter (10) according to one of the preceding claims, wherein the housing (12) comprises a first housing part (14) comprising lead edges (64) aligning the filter element (20) by abutting the upper end cap (24) of the filter element (20).

7. The air filter (10) according to one of the preceding claims, wherein the housing (12) further comprises an outlet conduit (72),
wherein the clean air outlet (74) is formed at the outlet conduit (72), and
wherein the outlet conduit (72) is in fluid communication with the annular outer space (66).

8. The air filter (10) according to one of the preceding claims, wherein the lower end cap (26) delimits the particle collection chamber (46).

9. The air filter (10) according to one of the preceding claims, wherein the filter element (20) further comprises a center conduit (32) arranged inside the annular filter medium body (22) and delimiting the particle collection chamber (46).

10. The air filter (10) according to claim 9, wherein the center conduit (32) comprises a grid section (34) and a closed skirt section (36), the grid section (34) being in fluid communication with the opening (28) of the upper end cap (24) and with the annular filter medium body (22), and the closed skirt section (36) delimiting the particle collection chamber (46) and being embedded in the lower end cap (26).

11. The air filter (10) according to claim 10, wherein the center conduit (32) comprises a separation floor (40) spanning across the closed skirt section (36) and delimiting the particle collection chamber (46).

12. The air filter (10) according to claim 11, wherein the separation floor (40) comprises a particle feed opening (44) sealingly connected to the particle outlet (60) of the inertial separator (18).

13. The air filter (10) according to claim 11 or 12, wherein the closed skirt section (36) is offset towards an inside of the filter element (20) with respect to the grid section (34), and
wherein an outer rim (42) of the separation floor (40) connects the grid section (34) and the closed skirt section (36), and comprises flow openings (84).

14. The air filter (10) according to one of the preceding claims, further comprising:
at least one suction bracket (75) in fluid communication with the raw air inlet (52); and
a vacuum generator (80) in fluid communication with the clean air outlet (74).

15. A filter element (20) for the air filter (10) according to one of the preceding claims, the filter element (20) being arranged in the housing (12) and comprising:
the upper end cap (24);
the lower end cap (26);
the annular filter medium body (22) arranged between the upper end cap (24) and the lower end cap (26), the upper end cap (24) comprising the opening (28); and
the annular outer space (66) arranged between the outer surface (68) of the annular filter medium body (22) and the housing (12), the annular outer space (66) being in fluid communication with the clean air outlet (74),
wherein the particle collection chamber (46) is arranged inside the filter element (20).
